# EUROPEAN PATENT APPLICATION

(11) **EP 4 822 227 A1**
(43) Date of publication of application: **14.10.2026**
(21) Application number: 25169622.5
(22) Date of filing: 10.04.2025
(51) Int. Cl.: F16K 31/04, F16K 31/52, F16K 41/10, F16K 49/00, F16K 51/02, F16K 1/48

(54) **A VALVE COMPRISING A VALVE HOUSING**

(71) Applicant: VAT Holding AG, 9469 Haag (CH)
(72) Inventor: Tischhauser, Tobias, 9478 Azmoos (CH); Ehrne, Florian, 9467 Frümsen (CH)
(74) Representative: Torggler & Hofmann Patentanwälte - Rankweil

(57) **Abstract**

A valve (1) comprising a valve housing (2) and a closure member (3) and a valve drive (5) for moving the closure member (3) to and fro between the closure position and the maximum open position, wherein the valve drive (5) comprises an eccentric (6), a lever (7) and a motor (8) with an output shaft (9), wherein the eccentric (6) is connected to the output shaft (9) so as to be rotatable around an output shaft rotation axis (10) of the output shaft (9) and the lever (7) is connected to the eccentric (6) by a first swivel axis (11) and is connected to the closure member (3) by a second swivel axis (12), wherein the first swivel axis (11) is arranged eccentrically relative to the output shaft rotation axis (10).

## Description

The invention relates to a valve comprising a valve housing and a closure member, wherein the closure member covers an opening in a closure position and uncovers the opening in an maximum open position. Furthermore, the valve comprises a valve drive for moving the closure member to and fro between the closure position and the maximum open position.

Valves of this type are known in the prior art in several embodiments. Examples thereof are disclosed in US 2012/0280153 A1.

It is the object of this invention to improve a valve of this type, so that the closure member can be moved very quickly between the closure position and the maximum open position.

This is achieved with a valve according to claim 1.

In other words, the invention is characterized in that, the valve drive comprises an eccentric and a lever and a motor with an output shaft, wherein the eccentric is connected to the output shaft so as to be rotatable around an output shaft rotation axis of the output shaft and the lever is connected to the eccentric by a first swivel axis and is connected to the closure member by a second swivel axis, wherein the first swivel axis is arranged eccentrically relative to the output shaft rotation axis.

With the use of the eccentric and the lever according to the invention it is achieved, that the closure member can be moved very quickly to and fro between the closure position and the maximum open position.

Preferably, the first swivel axis is arranged eccentrically relative to the output shaft rotation axis in all positions, the eccentric can take.

The motor can be any type of motor having a rotatable output shaft. Preferably, it is an electric motor. Electric motors can be controlled very exactly and can provide a lot of torque if necessary.

In the closure position the closure member can loosely cover the opening or it can seal the opening compression proof. The opening can be part of the valve itself. In particular, the opening can be arranged in a wall of the valve housing. But alternatively, the opening can not be part of the valve, too. The opening to be closed by the closure member could for example be arranged in a wall of another chamber, like a transfer chamber or a processing chamber, or in a wall of a conduit, as well.

In general, the closure member can be designed in many different ways. In preferred embodiments, the closure member comprises a valve shaft, wherein the second swivel axis is connected to the valve shaft. Furthermore, the closure member can comprise a valve plate, which covers the opening in the closure position, wherein the valve plate is connected, preferably fixed, to the valve shaft.

In very preferred embodiments the valve shaft and the valve plate together form a poppet valve. In case of a poppet valve it is intended, that a sealing area of the valve plate is arranged in a plane, on which the valve stem is arranged in a normal direction, or in other words, in a perpendicular direction.

Valves according to the invention can be used in very different areas of application. In preferred embodiments the valve according to the invention is a vacuum valve. These are valves used in vacuum technology. In vacuum technology vacuum valves have to be suitable to seal pressure diffences of 0,001 millibar and/or 0,1 Pascal or more.

In preferred embodiments the eccentric and the lever and the closure member are arranged in an inside of the valve housing. The motor can be arranged in the inside of the valve housing, as well, but in can be arranged outside the valve housing, too. In particular, the motor can be mounted to an outside of the valve housing. In these cases the output shaft of the motor can be directed through a wall of the valve housing into the inside to be connected to the eccentric.

Especially if the valve is a vacuum valve, the valve can comprise a bellows, which seals the valve shaft against the valve housing.

The valve shaft can be made in one piece. Alternatively, the valve shaft can comprise two or more valve shaft parts connected together. At least two of the valve shaft parts can be connected together by means of a detachable connection member. The detachable connection member can be of any suitable type. Preferably, the detachable connection member is a clamp. This type of embodiment comprising such detachable connection member allows to adjust the length of the valve shaft, for example to guarantee an optimal fit of the closure member, preferably of the valve plate, in the closure position.

In order to realize a pretensioning in case that the length of the valve shaft is adjusted, preferred embodiments provide that the detachable connection member is supported on an elastic member, preferably a spring, of the valve. Preferably, the detachable connection member is supported on a first end of the elastic member.

The elastic member, preferably a second end of the elastic member, can for example be supported on one of the valve shaft parts, which is detachably connectable to the detachable connection member. Preferably, the second end of the elastic member is opposite of the first end of the elastic member.

In preferred embodiments, the elastic member, preferably the second end of the elastic member, is supported on an end section of the bellows as mentioned above, wherein the end section of the bellows is supported on one of the valve shaft parts, which is detachably connectable to the detachable connection member.

The valve according to the invention can be provided with a bypass which is arranged in the valve housing for bypassing the closure member in its closure position. Preferably, the valve in addition comprises a setting member to set a fluid flow through the bypass. This can be used for example to ensure a mimimum flow rate in one direction and/or to prevent a backflow of the fluid in the wrong direction.

In order to avoid or at least to minimize undesired deposits of particles on the closure member and/or the inside walls of the valve housing, preferred embodiments provide, that the valve comprises at least one heating element, preferably at least one heating cartridge, to heat the valve shaft and/or the valve housing. By heating the valve shaft, the valve plate can be heated, as well. The state of the art provides many possibilities of such heating elements which can be implemented when building valves according to the invention.

The movement path of the closure member of valves according to the invention can have different shapes. Preferably, the valve drive moves the closure member to and fro between the closure position and the maximum open position on a linear movement path.

In order to provide a high pressure and with that a high sealing force, when the closure member reaches the closure position without the burden of a huge load on the motor, it is preferred that the arrangement of the eccentric and the lever comes close to a dead center of its movement. This can be achieved in preferred embodiments, in that a straight line connecting the first swivel axis with the second swivel axis encloses an angle of less than 5°, preferably of less than 3°, with the linear movement path, when the closure member is in its closure position. The same can apply when the closure member is in its maximum open position, although normally there is no huge force requirement in this position of the closure member.

Although the features and elements of the invention and its preferred embodiments are normally mentioned in their minimum number, they all can be realized in a larger number, when realizing embodiments of the invention.

Additional features and details of preferred embodiments of the invention are exemplarily explained with the help of the embodiments of the invention displayed in the figures and explained below. It is shown in:
- fig.1: a topview on an embodiment of the invention;
- fig.2: a representation of a section along the section line AA shown in Fig.1, wherein the closure member is in its closure position;
- fig.3: a representation of a section along the section line AA shown in Fig.1, wherein the closure member is in an intermediate open position;
- fig.4: a representation of a section along the section line AA shown in Fig.1, wherein the closure member is in its maximum open position, and
- fig.5: a representation of a section along the section line BB shown in Fig.1, wherein the closure member is in its closure position;

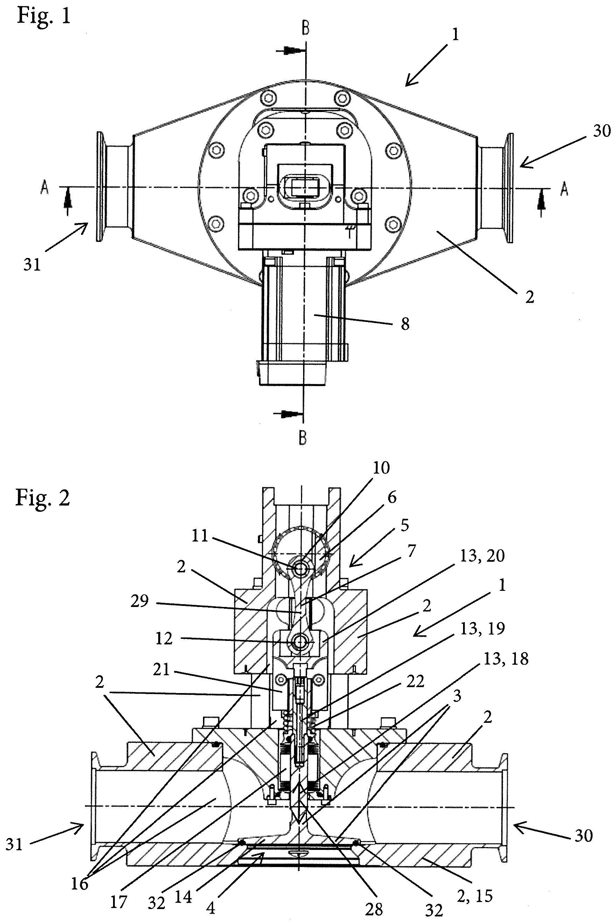

Fig. 1 shows top view of a valve 1 according to an embodiment of the invention. It can be seen that the valve 1 comprises a valve housing 2 with two chamber openings 30 and 31, which are arranged on opposite sides of the valve housing 2. Nevertheless, this is just an example. The valve housing 2 of inventive valves 1 can have just one opening or several openings to which different chambers like transfer chambers or processing chambers, conduits and so on can be connected.

In the top view of fig. 1 the motor 8 can be seen. This motor 8 is arranged in this embodiment on an outside of the valve housing 2. Nevertheless, it should be pointed out that the motor 8 could be arranged in other embodiments in an inside 16 of the valve housing 2, too.

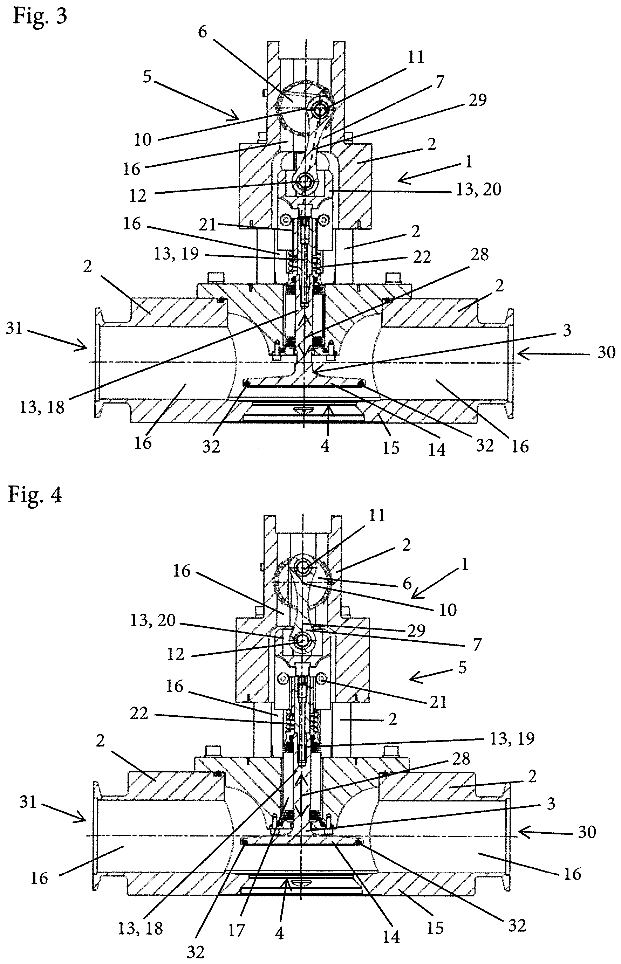

The fig. 2 to 4 each so show a representation of a section along the section line A-A as displayed in fig. 1. In fig. 2 the closure member 3 is arranged in its closure position. In fig. 3 the closure member 3 is arranged in an intermediate open position. In fig. 4 the closure member 3 is in its maximum open position.

Except for the motor 8, which is arranged outside the valve housing 2, and its output shaft (9) nearly all parts of the valve drive 5 of this valve 1 can be seen in fig. 2 to 4. The valve drive 5 is used to move the closure member 3 to and fro between the closure position as shown in fig. 2 and the maximum open position as shown in fig. 4. As can be seen in all the fig. 2 to 4 the valve drive 5 comprises an eccentric 6 and a lever 7. The output shaft 9 of the motor 8 can only be seen in fig. 6. There, it is visible, too, that the eccentric 6 is connected to the output shaft 9 so as to be rotatable around an output shaft rotation axis 10 of the output shaft 9. As can be seen in fig. 2 to 4, the lever 7 is connected to the eccentric 6 by a first swivel axis 11 and is connected to the closure member 3 by a second swivel axis 12. The first swivel axis 11 is arranged eccentrically relative to the output shaft rotation axis 10 of the output shaft 9.

The motor 8 can be any suitable motor. Preferably it is an electric motor.

When the motor 8 rotates the output shaft 9, this rotation around the output shaft rotation axis 10 is transferred to the eccentric 6, so that the eccentric 6 rotates arround the output shaft rotation axis 10. With this, the lever 7 which is connected to the eccentric 6 by the first swivel axis 11 is moved. The lever 7 transfers its movement to the valve shaft 13 via the second swivel axis 12.

By rotating the eccentric 6 and with that moving the lever 7, the valve shaft 13 and with that the closure member 12 with its valve plate 14 can be moved to and fro along the linear movement path 28, so that the valve plate 14 and with that the closure member 3 can be brought into the closure position, the maximum open position and any intermediate open position therebetween.

The valve shaft 13 and the valve plate 14 together form a poppet valve in this embodiment. Nevertheless, it should be pointed out, that the invention can be carried out for valves 11 with other closure members 3, as well.

The opening 4, which is covered or uncovered by the closure member 3 in this embodiment, is situated in a wall 15 of the valve housing 2. Nevertheless, it should be pointed out that this is not necessarily case. The opening 4 which is covered or uncovered by the closure member is not necessarily a part of the valve housing 2. It could be, apart from this example, an opening of a transfer chamber or a processing chamber or any other conduit, as well. In the example as shown, a pump could be connected to the opening 4. Nevertheless, this is just an example. As already pointed out, it is not necessarily the case in embodiments according to the invention, that there is a first chamber opening 30, a second chamber opening 31 and the opening 4. It could be just one opening or any other number of openings in the valve housing 2.

The valve plate 14 of this example has a sealing ring 32 to seal off the opening 4 in the closure position. Nevertheless, it is not necessary, that there is a sealing ring 32. In other alternative embodiments a corresponding sealing ring 32 could be arranged in the valve seat, in particular of the valve housing 2, as well.

In this and other preferred embodiments the eccentric 6 and the lever 7 and the closure member 3 are arranged in the inside 16 of the valve housing 2. Nevertheless, this is not necessary, as well. On the other hand, even the motor 8 could be arranged within the valve housing 2.

Although the valve shaft 13 could be made in one piece, this is not the case in the embodiment shown here. In this embodiment as in other possible embodiments, the valve shaft 13 comprises three valve shaft parts 18, 19 and 20, which are connected together to form the valve shaft 13. With respect to that it is pointed out, that there could be two or more valve shaft parts 18, 19 and 20 in different embodiments. As can be seen in fig. 2 to 4, in this embodiment the valve shaft part 19 and the valve part shaft 20 are connected together by means of a detachable connection member 21. The detachable connection member 21 can be of any suitable type. In this embodiment the detachable connection member 21 is a clamp. When this clamp is in its open state, the position of the valve shaft part 18 can be changed with respect to the valve shaft part 20, which contains the detachable connection member 21 in this case. In this way, the length of the valve shaft 13 can be adjusted as desired, so that the valve plate 14 reaches its closure position and its maximum open position as desired.

In this embodiment, the detachable connection member 21 is supported on an elastic member 22, which is in this embodiment a spring. In addition, there is a bellows 17 which seals the valve shaft 13 against the valve housing 2 as by itself known from prior art. Nevertheless, it should be pointed out, that the elastic member 22, the bellows 17 and the multipart construction of the valve shaft 13 are optional and not necessarily existing in other embodiments of the invention.

When looking at fig. 2 and fig. 4 it can be seen, that in this preferred embodiment a straight line 29 connecting the first swivel axis 11 with the second swivel axis 12 encloses an angle of less than 5°, preferably of less than 3°, with the linear movement path 28 of the closure member 13, when the closure member 13 is in its closure position and in its maximum open position. In particular, when the closure member 3 is in the closure position, this has the benefit to provide huge closure forces without the need of huge forces provided by the motor 8.

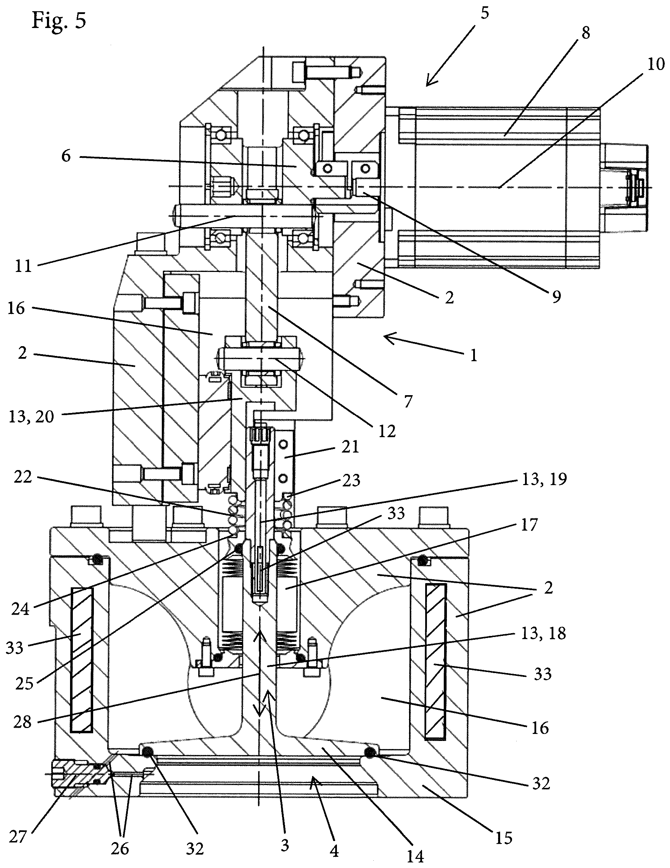

Referring now to fig. 5, which is a representation of a section along the section line B-B shown in fig. 1, the arrangement of the valve shaft 13, the bellows 17 and the elastic member 22 of this embodiment can be explained in more detail.

Fig. 5 clearly displays that in this embodiment the detachable connection member 21 is supported on a first end 23 of the elastic member 22. On the opposite side, the elastic member 22 is supported with its second end 24 on the valve shaft part 18, which is, together with the valve shaft part 19, detachably connected to the detachable connection member 21. The valve shaft parts 18 and 19 of this embodiment can be connected together by a screw or any other suitable means.

In this embodiment, the second end 24 of the elastic member 22 is supported on an end section 25 of the bellows 17. The end section 25 of the bellows 17 is supported on the valve shaft part 18 via an inclined face, as can be seen in fig. 5. Arranged in this way, the elastic member 22 can on the one hand be used to pre-tension the detachable connection member 21, when this is in open condition. When detachable connection member 21 is in closed condition, the spring 22 presses the end section 25 of the bellows 17 against the inclined face as mentioned above and therewith against the valve shaft part 18.

In fig. 5 it is shematically indicated, that there can be heating elements 33 to heat the valve housing 2 and/or the valve shaft 13 and with that the valve plate 14. If necessary, such a heating element 33 could even be arranged directly in the valve plate 14. In the state of the art several possibilities are known, how to realize such heating elements 33. In particular, these can be heating cartridges. With the help of such heating elements 33 the temperature of the closure member 3 and/or the valve housing 2 can be braught to a range, in which undesired deposition of particles is avoided or at least reduced. For the sake of clarity it should be pointed out, that the heating elements 33 are an optional feature of the invention, which means, that embodiments of the invention are possible, which have no heating elements 33.

On the lower left corner of fig. 5 it can be seen, that in this embodiment of the invention there is a bypass 26, which is arranged in the valve housing 2 bypassing the closure member 3, when it is in its closure position as shown in fig. 5. This can be used for example to ensure a minimum flow rate in one direction and/or to prevent a back flow of fluid in the wrong direction, as already explained above. In this embodiment and in other preferred embodiments there can be a setting member 27, with which the fluid flow through the bypass 26 can be set or in other words regulated. In the case shown here, the setting member 27 is a screw. Nevertheless, any other suitable setting members can be used.

### Legend for the reference characters:

| | | | |
|---|---|---|---|
| 1 | valve | 29 | straight line |
| 2 | valve housing | 30 | first chamber opening |
| 3 | closure member | 31 | second chamber opening |
| 4 | opening | 32 | sealing ring |
| 5 | valve drive | 33 | heating element |
| 6 | eccentric | | |
| 7 | lever | | |
| 8 | motor | | |
| 9 | output shaft | | |
| 10 | output shaft rotation axis | | |
| 11 | first swivel axis | | |
| 12 | second swivel axis | | |
| 13 | valve shaft | | |
| 14 | valve plate | | |
| 15 | wall | | |
| 16 | inside | | |
| 17 | bellows | | |
| 18 | valve shaft part | | |
| 19 | valve shaft part | | |
| 20 | valve shaft part | | |
| 21 | detachable connection member | | |
| 22 | elastic member | | |
| 23 | first end | | |
| 24 | second end | | |
| 25 | end section | | |
| 26 | bypass | | |
| 27 | setting member | | |
| 28 | linear movement path | | |

## Claims

1. A valve (1) comprising:
- a valve housing (2) and
- a closure member (3), wherein the closure member (3) covers an opening (4) in a closure position and uncovers the opening (4) in an maximum open position, and
- a valve drive (5) for moving the closure member (3) to and fro between the closure position and the maximum open position,
**characterized in that**,
the valve drive (5) comprises an eccentric (6) and a lever (7) and a motor (8) with an output shaft (9), wherein the eccentric (6) is connected to the output shaft (9) so as to be rotatable around an output shaft rotation axis (10) of the output shaft (9) and the lever (7) is connected to the eccentric (6) by a first swivel axis (11) and is connected to the closure member (3) by a second swivel axis (12), wherein the first swivel axis (11) is arranged eccentrically relative to the output shaft rotation axis (10).

2. The valve (1) according to claim 1, wherein the closure member (3) comprises a valve shaft (13), wherein the second swivel axis (12) is connected to the valve shaft (13).

3. The valve (1) according to claim 2, wherein the closure member (3) comprises a valve plate (14), which covers the opening (4) in the closure position, wherein the valve plate (14) is connected, preferably fixed, to the valve shaft (13).

4. The valve (1) according to claim 3, wherein the valve shaft (13) and the valve plate (14) together form a poppet valve.

5. The valve (1) according to at least one of the claims 1 to 4, wherein the opening (4) is arranged in a wall (15) of the valve housing (2).

6. The valve (1) according to at least one of the claims 1 to 5, wherein the eccentric (6) and the lever (7) and the closure member (3) are arranged in an inside (16) of the valve housing (2).

7. The valve (1) according to at least one of the claims 2 to 6, wherein the valve (1) comprises a bellows (17), which seals the valve shaft (13) against the valve housing (2).

8. The valve (1) according to at least one of the claims 2 to 7, wherein the valve shaft (13) comprises two or more valve shaft parts (18, 19, 20), wherein at least two of the valve shaft parts (18, 19, 20) are connected together by means of a detachable connection member (21), preferably by means of a clamp.

9. The valve (1) according to claim 8, wherein the detachable connection member (21) is supported on an elastic member (22), preferably a spring, of the valve (1), preferably on a first end (23) of the elastic member (22).

10. The valve (1) according to claim 9, wherein the elastic member (22), preferably a second end (24) of the elastic member (22), is supported on one of the valve shaft parts (18, 19, 20), which is detachably connectable to the detachable connection member (21).

11. The valve (1) according to claim 9, wherein the elastic member (22), preferably a second end (24) of the elastic member (22), is supported on an end section (25) of a or the bellows (17), wherein the end section of the bellows is supported on one of the valve shaft parts (18, 19, 20), which is detachably connectable to the detachable connection member (21).

12. The valve (1) according to at least one of the claims 1 to 11, wherein a bypass (26) is arranged in the valve housing (2) for bypassing the closure member (3) in its closure position, preferably wherein the valve comprises a setting member (27) to set a fluid flow through the bypass (26).

13. The valve (1) according to at least one of the claims 2 to 12, wherein the valve comprises at least one heating element (33), preferably at least one heating cartridge, to heat the valve shaft (13) and/or the valve housing (2).

14. The valve (1) according to at least one of the claims 1 to 13, wherein the valve drive (5) moves the closure member (3) to and fro between the closure position and the maximum open position on a linear movement path (28).

15. The valve (1) according to claim 14, wherein a straight line (29) connecting the first swivel axis (11) with the second swivel axis (12) encloses an angle of less than 5°, preferably of less than 3°, with the linear movement path (28), when the closure member (3) is in its closure position and/or in its maximum open position.
